# FASCICULE DE BREVET EUROPEEN

(11) **EP 4 413 659 B1**
(45) Date de publication et mention de la délivrance du brevet: **22.04.2026**
(21) Numéro de dépôt: 22786844.5
(22) Date de dépôt: 29.09.2022
(51) Int. Cl.: H02S 20/25

(54) **PLAQUE DE SUPPORT POUR L'INTÉGRATION DE PANNEAUX PHOTOVOLTAÏQUES DE DIFFÉRENTES DIMENSIONS**
TRÄGERFOLIE ZUR INSTALLATION VON FOTOVOLTAISCHEN PANEELEN VERSCHIEDENER ABMESSUNGEN
CARRIER SHEET FOR INSTALLING PHOTOVOLTAIC PANELS OF VARIOUS DIMENSIONS

(30) Priorité: 04.10.2021 FR 2110448
(43) Date de publication de la demande: 14.08.2024
(73) Titulaire: Gys Holding, 93400 Saint-Ouen-sur-Seine (FR)
(72) Inventeur: DOUIEB, Yaniv, Tel Aviv (IL)
(74) Mandataire: Alatis
(86) Numéro de dépôt international: PCT/IB2022/059307
(87) Numéro de publication internationale: WO 2023/057863

(56) Documents cités:
- EP-A1- 1 310 747
- EP-A2- 2 600 078
- FR-A1- 2 957 101
- US-A1- 2005 161 074
- US-A1- 2017 005 610
- US-A1- 2017 070 183
- US-B1- 6 201 179

## Description

### Domaine de l'invention

La présente demande de brevet se rapporte au domaine de la fixation et de l'intégration des panneaux photovoltaïques sur une toiture, et plus particulièrement à une plaque de support pour la fixation et l'intégration d'un panneau photovoltaïque sur une toiture d'un bâtiment.

L'invention concerne également un dispositif pour la fixation et l'intégration d'une pluralité de panneaux photovoltaïques, qui comporte une pluralité de plaques de support formant plateforme de support.

### Etat de la technique

L'installation et la fixation des panneaux photovoltaïques sont traditionnellement effectuées à l'aide de systèmes de rails métalliques qui pèsent lourds et nécessitent des moyens de transport adaptés.

De plus, l'installation sur toiture d'un système de rails métalliques est délicate.

On connaît également de l'état de la technique une plaque de support pour panneau photovoltaïque qui est décrite et représentée dans le document EP-A-3143691. Une telle plaque de support est adaptée pour la fixation et l'intégration d'un panneau photovoltaïque sur une toiture.

A cet effet, la plaque de support, qui est montée sur la toiture, comporte des plots pour le support et la fixation du panneau photovoltaïque sur la plaque de support.

Aussi, la plaque de support décrite dans le document EP-A-3143691 comporte un premier bord latéral et un second bord latéral qui sont chacun de forme en U inversé et qui sont adaptés pour être assemblés chacun avec un bord complémentaire d'une plaque de support voisine.

Le premier bord latéral et le second bord latéral font saillie par rapport aux plots de support du panneau photovoltaïque, de sorte que le panneau photovoltaïque posé sur la plaque de support est intercalé entre les deux bords latéraux.

De plus, des cavaliers sont vissés sur le premier bord latéral et sur le second bord latéral pour fixer le panneau photovoltaïque supporté par la plaque de support.

### Problème technique restant posé

Bien que la plaque de support du type décrite dans le document EP-A-3143691 permette une installation aisée d'un panneau photovoltaïque, elle n'est adaptée qu'à une seule dimension de panneau photovoltaïque.

En effet, les bords latéraux de la plaque de support contraignent la position du panneau photovoltaïque sur la plaque de support et ils s'opposent à un agencement libre du panneau photovoltaïque.

### Exposé de l'invention

La présente invention a notamment pour but de résoudre cet inconvénient.

On atteint cet objectif, ainsi que d'autres qui apparaîtront à la lecture de la description qui suit, avec une plaque de support adaptée pour la fixation et l'intégration d'au moins un panneau photovoltaïque sur une toiture d'un bâtiment, ladite plaque de support étant selon la revendication 1.

Suivant d'autres caractéristiques optionnelles de l'invention, prises seules ou en combinaison :
- le second bord latéral est affleurant à la première surface d'appui de la plaque de support. Cette caractéristique permet au second bord latéral de former une surface d'appui pour permettre le support d'un panneau photovoltaïque ;
- le premier bord latéral et le second bord latéral forment une première nervure et une seconde nervure respectivement qui s'étendent chacune transversalement, le second bord latéral étant conçu pour être emboîté avec le premier bord latéral par coopération de forme, afin de permettre un assemblage de ladite plaque de support avec au moins une plaque de support voisine, et le second bord latéral est conçu pour chevaucher et couvrir le premier bord latéral de façon étanche ;
- le premier bord latéral comporte un renfort mécanique de rigidification. Cette caractéristique permet au premier bord latéral de former une surface de support et de fixation d'un ou plusieurs panneaux photovoltaïques ;
- la plaque de support comporte au moins une seconde surface d'appui, la première surface d'appui et la seconde surface d'appui étant agencées de part et d'autre d'un axe médian longitudinal de la plaque de support ;
- la première surface d'appui et la seconde surface d'appui comportent chacune un renfort mécanique de rigidification. Cette caractéristique permet à la première surface d'appui et à la seconde surface d'appui de former une surface de support et de fixation d'un ou plusieurs panneaux photovoltaïques ;
- la plaque de support est équipée d'une première rallonge amovible qui présente un premier bord latéral et un second bord latéral, et qui est prévue pour être montée sur l'extrémité amont de la plaque de support, pour augmenter longitudinalement la dimension de la plaque de support, et la surface d'appui de la plaque de support est affleurante, ou proéminente, par rapport au premier bord latéral et au second bord latéral de la première rallonge, de sorte que la première rallonge autorise un agencement libre de tout ou partie d'au moins un panneau photovoltaïque sur l'ensemble formé par la plaque de support et la première rallonge ;
- la plaque de support est équipée d'une seconde rallonge amovible qui présente un premier bord latéral conçu pour être emboîté sur le second bord latéral de la plaque de support, et un second bord latéral conçu pour être emboîté sur le premier bord latéral de la plaque de support, pour augmenter transversalement la dimension de la plaque de support, et la surface d'appui de la plaque de support est affleurante, ou proéminente, par rapport au premier bord latéral et au second bord latéral de la seconde rallonge, de sorte que la seconde rallonge autorise un agencement libre de tout ou partie d'au moins un panneau photovoltaïque sur l'ensemble formé par la plaque de support et la seconde rallonge ;
- la plaque de support présente un évidemment pour le passage d'un câble.

L'invention concerne également un dispositif pour la fixation et l'intégration d'une pluralité de panneaux photovoltaïques sur une toiture d'un bâtiment, caractérisé en ce qu'il comporte au moins une première plaque de support et une seconde plaque de support du type décrite précédemment, le premier bord latéral de la première plaque de support étant assemblé avec le second bord latéral de la seconde plaque de support pour former une plateforme qui est adaptée pour le support et le positionnement libre d'une pluralité de panneaux photovoltaïques.

On entend par « positionnement libre » la capacité de positionner les panneaux photovoltaïques sur la plateforme formée par les plaques de support selon l'invention, aussi bien dans un agencement en « paysage » que dans un agencement en « portrait », ou encore en combinant ces deux agencements « paysage » et « portrait ».

### Brève description des dessins

D'autres caractéristiques et avantages de l'invention ressortiront à la lecture de la description qui suit, en référence aux figures annexées, qui illustrent :
[Fig. 1] : une vue en perspective d'une plaque de support d'un panneau photovoltaïque selon l'invention ;
[Fig. 2] : une vue en section transversale de la plaque de support de la figure 1 qui est assemblée à deux autres plaques de support voisines ;
[Fig. 3] : une vue de détail du chevauchement de la plaque de support avec une plaque de support voisine de la figure 2 ;
[Fig. 4] : une vue en perspective d'une première rallonge de la plaque de support ;
[Fig. 5] : une vue en perspective d'une seconde rallonge de la plaque de support ;
[Fig. 6] : une vue en perspective d'une première cornière de fin de champs ;
[Fig. 7 : une vue en perspective d'une seconde cornière de fin de champs ;
[Fig. 8] : une vue en perspective d'un dispositif comprenant une pluralité de plaque de support selon l'invention.

Dans la description et les revendications, on adoptera à titre non limitatif la terminologie longitudinal, vertical et transversal en référence au trièdre L, V, T indiqué aux figures.

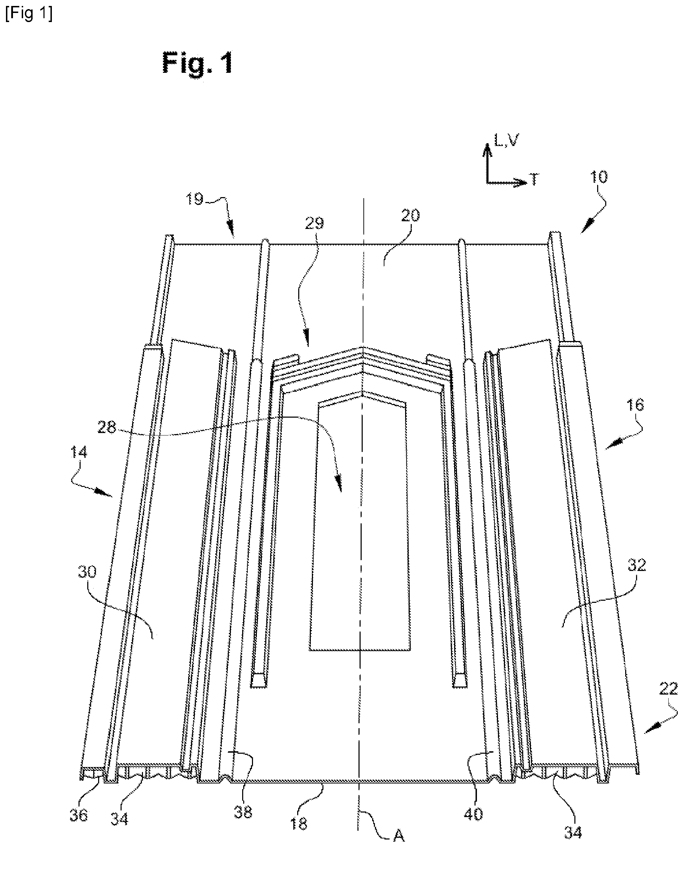

Aussi, on utilisera la terminologie amont et aval en référence au sens d'écoulement des eaux de ruissellement sur la plaque de support lorsqu'elle est agencée en format portrait sur une toiture, comme illustré à la figure 1.

Sur l'ensemble de ces figures, les éléments identiques ou similaires sont repérés par des signes de référence identiques ou similaires.

### Description détaillée de modes de réalisation de l'invention

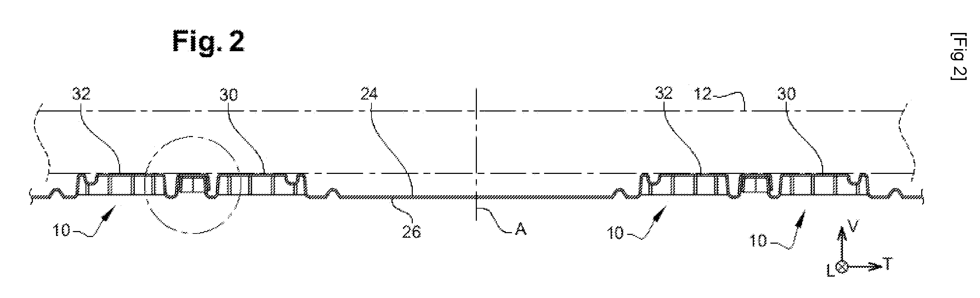

On a représenté à la figure 1 une plaque de support 10 qui est adaptée pour la fixation et l'intégration d'un panneau photovoltaïque 12 (visible à la figure 2).

La plaque de support 10 est destinée à être agencée sur une toiture (non représentée), généralement de façon inclinée par rapport à un axe vertical, suivant la pente de la toiture.

La plaque de support 10 s'étend transversalement depuis un premier bord latéral 14 longitudinal, jusqu'à un second bord latéral 16 longitudinal opposé.

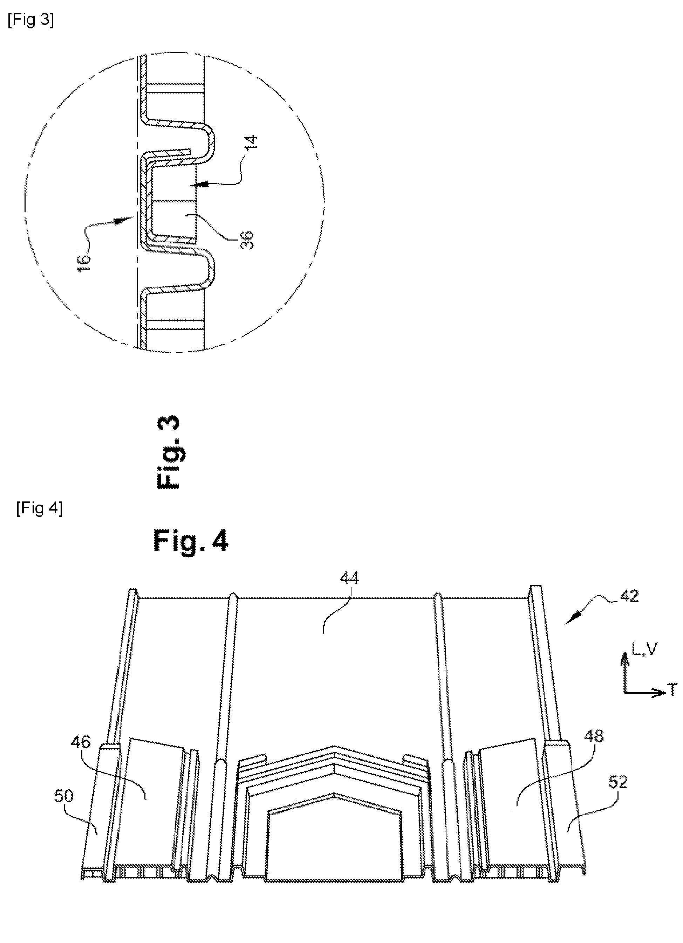

Le premier bord latéral 14 et le second bord latéral 16 de la plaque de support 10 présentent chacun une section transversale globalement en U inversé, comme on peut le voir sur la vue de détail de la figure 3.

La figure 2 représente une première plaque 10 de support qui est assemblée sur une seconde plaque de support 10 sur la partie gauche de la figure 2, et sur une troisième plaque de support 10 sur la partie droite de la figure 2.

Le second bord latéral 16 est conçu pour être emboîté avec le premier bord latéral 14 et pour chevaucher le premier bord latéral 14 de forme complémentaire, lorsque deux plaques de support 10 voisines sont juxtaposées transversalement comme illustré aux figures 2, 3 et 8, pour assurer une bonne étanchéité entre les plaques de support 10 associées et pour bloquer transversalement les plaques de support 10 ainsi assemblées.

En effet, le chevauchement des bords latéraux 14, 16 et leur forme en U inversé empêche l'eau de pluie de traverser les plaques de supports 10 assemblées entre elles.

Aussi, le premier bord latéral 14 et le second bord latéral 16 s'étendent longitudinalement depuis une extrémité aval 18 de la plaque de support 10, jusqu'à une extrémité amont 19 formant une portion de recouvrement 20 amont.

La portion de recouvrement 20 de la plaque de support 10 présente une forme qui est adaptée pour être recouverte par une plaque de support supplémentaire agencée en amont de la plaque de support 10.

Autrement dit, la plaque de support 10 comporte une portion inférieure 22 qui est adaptée pour chevaucher la portion de recouvrement 20 d'une plaque de support aval, sans former de surépaisseur.

Aussi, la plaque de support 10 présente une face avant 24 qui est destinée à être agencée en regard du panneau photovoltaïque 12 et une face arrière 26 opposée qui est destinée à être agencée en regard de la toiture.

Selon un autre aspect, en référence à la figure 1, la plaque de support 10 délimite un évidemment 28 qui est agencé globalement au centre de la plaque de support 10 et qui est prévu pour le passage de câbles, par exemple, ou tout autre élément devant traverser la plaque de support 10.

En complément, la plaque de support 10 forme un bourrelet 29 qui présente une forme en U inversé et qui chapeaute l'évidement 28 pour guider un éventuel ruissellement d'eau au-delà de l'évidement 28.

Comme on peut le voir sur les figures 1 et 2, la plaque de support 10 comprend une première surface d'appui 30 et une seconde surface d'appui 32 qui s'étendent longitudinalement depuis l'extrémité aval 18 de la plaque de support 10, jusqu'à la portion de recouvrement 20.

La première surface d'appui 30 et la seconde surface d'appui 32 sont agencées de part et d'autre d'un axe médian A longitudinal de la plaque de support 10.

La première surface d'appui 30 est interposée entre le premier bord latéral 14 et l'évidement 28 et la seconde surface d'appui 32 est interposée entre le second bord latéral 16 et l'évidement 28.

La première surface d'appui 30 et la seconde surface d'appui 32 sont prévues pour supporter la charge d'au moins un panneau photovoltaïque et d'un poseur.

A cet effet, la première surface d'appui 30 et la seconde surface d'appui 32 comportent chacune un renfort 34 mécanique alvéolé de rigidification, du type nid d'abeille par exemple.

Conformément à l'invention, la première surface d'appui 30 et la seconde surface d'appui 32 sont chacune affleurantes par rapport au second bord latéral 16.

Ainsi, le premier bord latéral 14 et le second bord latéral 16 autorisent un agencement libre de tout ou partie d'au moins un panneau photovoltaïque 12 sur la plaque de support 10, sans que le premier bord latéral 14 et le second bord latéral 16 ne fassent obstacle au positionnement libre du panneau photovoltaïque 12.

On notera que le second bord latéral 16 est proéminent, ou sensiblement plus haut, que le premier bord latéral 14, suivant une direction verticale perpendiculaire au plan général de la plaque de support 10, pour permettre au second bord latéral 16 de chevaucher le premier bord latéral 14 sans former de surépaisseur par rapport aux surfaces d'appui 30, 32.

Aussi, chaque surface d'appui 30, 32 permet la fixation, par exemple par vis, d'un dispositif de fixation (non représenté) du panneau photovoltaïque 12.

Un tel dispositif de fixation comporte par exemple une pluralité de cavaliers qui sont vissés sur les surfaces d'appui 30, 32 et qui retiennent le ou les panneaux photovoltaïques 12 posés sur la plaque de support 10.

De même, lorsque le premier bord latéral 14 et le second bord latéral 16 sont dans une configuration emboîtée comme illustrée à la figure 2, ils forment une zone d'appui et de fixation du panneau photovoltaïque 12.

A cet effet, le premier bord latéral 14 comporte un renfort 36 mécanique alvéolé de rigidification, du type nid d'abeille par exemple.

Avantageusement, il est prévu de fixer des butées, comme des équerres par exemple, sur les surfaces d'appui 30, 32 de la plaque de support 10, pour positionner et maintenir le panneau photovoltaïque le temps de le fixer sur la plaque de support 10 au moyen du dispositif de fixation prévu à cet effet.

Selon un autre aspect de l'invention, la plaque de support 10 forme une première onde 38 et une seconde onde 40 de déformation qui s'étendent chacune longitudinalement sur toute la longueur de la plaque de support 10 et qui sont agencées de part et d'autre de l'évidement 28 central.

La première onde 38 et la seconde onde 40 de déformation permettent à la plaque de support 10 de s'étendre ou de se rétracter suivant une direction transversale, perpendiculaire aux ondes 38, 40, par exemple pour permettre la dilatation de la plaque de support 10.

En référence à la figure 4, la plaque de support 10 est équipée d'une première rallonge 42 amovible qui est prévue pour être agencée sur l'extrémité amont 19 de la plaque de support 10, formée par la portion de recouvrement 20, afin d'augmenter la longueur de la plaque de support 10 associée, suivant une direction longitudinale.

A cet effet, la première rallonge 42 présente une conception similaire à celle de la plaque de support 10, la première rallonge 42 présentant une longueur inférieure à celle de la plaque de support 10 précédemment décrite, suivant une direction longitudinale.

Plus particulièrement, la première rallonge 42 comporte une portion de recouvrement 44, qui est similaire à la portion de recouvrement 20 de la plaque de support 10 précédemment décrite, et une zone pour le support d'un panneau photovoltaïque qui comprend notamment une première surface d'appui 46 et une seconde surface d'appui 48 prévues chacune pour supporter tout ou partie d'un panneau photovoltaïque.

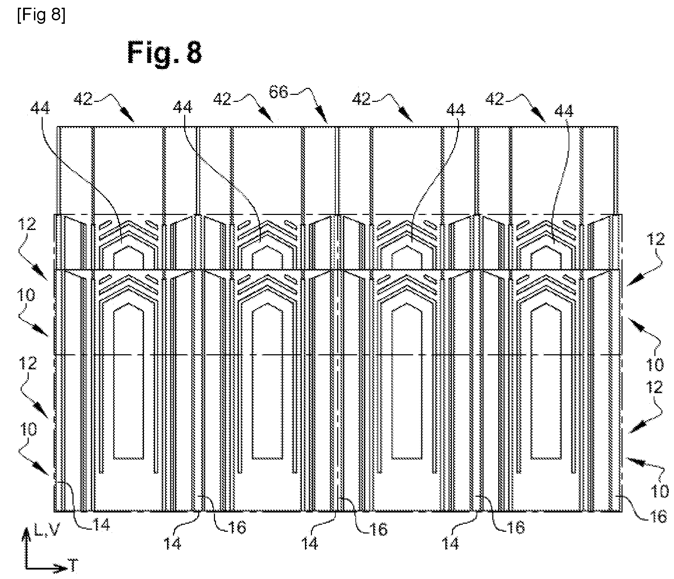

La première rallonge 42 comporte également un premier bord 50 latéral et un second bord 52 latéral qui sont conçus pour coopérer avec un second bord 52 latéral et un premier bord 50 latéral respectivement d'une première rallonge 42 voisine, comme illustré à la figure 8.

On notera que les surfaces d'appui 30, 32 de la plaque de support 10 sont affleurantes par rapport aux surfaces d'appui 46, 48 et au premier bord latéral 50 et au second bord latéral 52 de la première rallonge 42, de sorte que la première rallonge 42 autorise un agencement libre de tout ou partie d'au moins un panneau photovoltaïque.

Autrement dit, le point culminant de la première rallonge 42 est affleurant au point culminant de la plaque de support 10.

A titre non limitatif, les surfaces d'appui 30, 32 de la plaque de support 10 peuvent être proéminentes par rapport au premier bord latéral 50 et au second bord latéral 52 de la première rallonge 42.

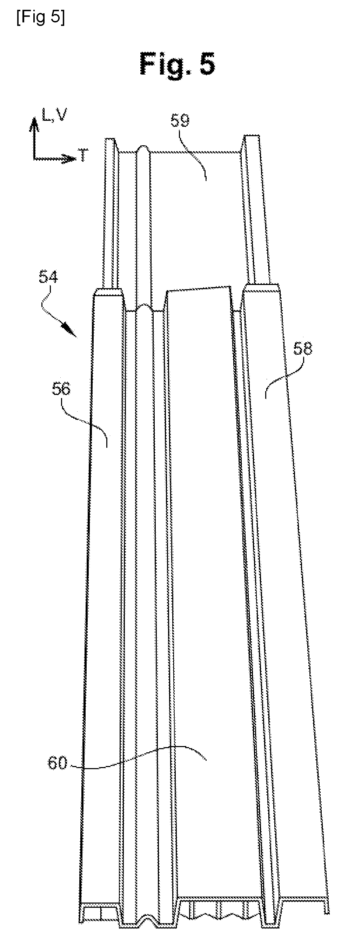

En référence à la figure 5, la plaque de support 10 est équipée d'une seconde rallonge 54 amovible qui est délimitée transversalement par un premier bord latéral 56 et par un second bord latéral 58.

Le second bord latéral 58 de la seconde rallonge 54 est conçu pour être emboîté avec le premier bord latéral 14 de la plaque de support 10 associée, pour augmenter transversalement la dimension de la plaque de support 10.

Le premier bord latéral 56 et le second bord latéral 58 de la seconde rallonge 54 s'étendent longitudinalement depuis un bord aval de la seconde rallonge 54, jusqu'à une portion de recouvrement 59 amont.

La portion de recouvrement 59 de la seconde rallonge 54 présente une forme qui est adaptée pour être recouverte par une seconde rallonge 54 supplémentaire agencée en amont de la seconde rallonge 54 décrite précédemment.

De plus, la seconde rallonge 54 présente une surface d'appui 60 prévue pour supporter tout ou partie d'un panneau photovoltaïque.

On notera que les surfaces d'appui 30, 32 de la plaque de support 10 sont affleurantes par rapport à la surface d'appui 60 et au premier bord latéral 56 et au second bord latéral 58 de la seconde rallonge 54, de sorte que la seconde rallonge 54 autorise un agencement libre de tout ou partie d'au moins un panneau photovoltaïque.

Autrement dit, le point culminant de la seconde rallonge 54 est affleurant au point culminant de la plaque de support 10.

A titre non limitatif, les surfaces d'appui 30, 32 de la plaque de support 10 peuvent être proéminentes par rapport au premier bord latéral 56 et au second bord latéral 58 de la seconde rallonge 54.

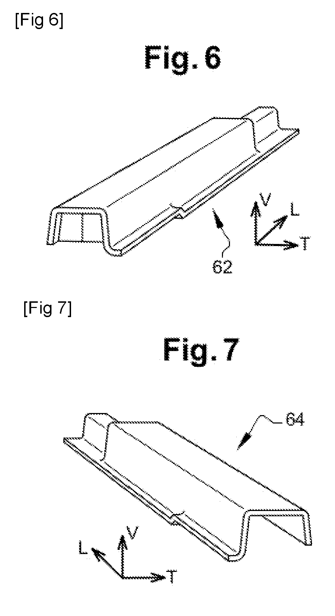

En référence à la figure 6, la plaque de support 10 est équipée d'une première cornière 62 de fin de champs, qui présente une géométrie similaire au premier bord latéral 14 de la plaque de support 10.

La première cornière 62 est prévue pour être chevauchée par le second bord latéral 16 de la plaque de support 10 qui est agencé à l'extrémité d'un ensemble formé de plusieurs plaque de support 10, comme illustré à la figure 8, pour renforcé mécaniquement le second bord latéral 16 d'extrémité de la plaque de support 10, notamment pour permettre de visser un moyen de fixation d'un panneau photovoltaïque sur ce bord latéral 16.

De même, en référence à la figure 7, la plaque de support 10 est équipée d'une seconde cornière 64 de fin de champs, qui présente une géométrie similaire à celle du second bord latéral 16 de la plaque de support 10.

La seconde cornière 64 est prévue pour chevaucher le premier bord latéral 14 de la plaque de support 10 qui est agencé à l'extrémité d'un ensemble formé de plusieurs plaque de support 10, comme illustré à la figure 8, de sorte que la seconde cornière 64 est affleurante par rapport aux surfaces d'appui 30, 32 de la plaque de support 10.

L'invention concerne également un dispositif 66 pour la fixation et l'intégration d'une pluralité de panneaux photovoltaïques 12 sur une toiture d'un bâtiment, comme illustré à la figure 8.

Le dispositif 66 comporte une pluralité de plaque de support 10 du type décrites précédemment, qui sont reliées entre elles pour former une plateforme qui est adaptée pour supporter et positionner librement une pluralité de panneaux photovoltaïques.

Les dimensions de la plateforme formée par le dispositif 66 peuvent être ajustées au moyen d'ajout de rallonges, telles que la première rallonge 42 et la seconde rallonge 54, suivant le calepinage des panneaux photovoltaïques à supporter.

Selon l'exemple illustré à la figure 8, le dispositif 10 comporte quatre plaques de support 10 qui sont réparties transversalement et qui sont assemblées entre elle au moyen du premier bord latéral 14 et du second bord latéral 16 de chaque plaque de support 10.

De plus, chaque plaque de support 10 est associée à une première rallonge 42 du type décrite précédemment.

On a représenté à la figure 8 un exemple d'une configuration du dispositif 66 qui comprend quatre plaques des support 10 et quatre premières rallonges 42, la position des panneaux photovoltaïques étant matérialisée par un trait discontinu.

On notera que les panneaux photovoltaïques sont agencés en «paysage» alors que les plaques de support 10 sont agencées en « portrait», chaque panneau photovoltaïque étant agencé sur deux plaques de support 10, selon l'exemple illustré à la figure 8.

Ainsi, la plaque de support 10 selon l'invention permet de former une plateforme qui peut supporter un ensemble de panneaux photovoltaïques et qui peut être adaptée selon les dimensions des panneaux photovoltaïques à supporter.

Naturellement, l'invention est décrite dans ce qui précède à titre d'exemple. **Il** est entendu que l'homme du métier est à même de réaliser différentes variantes de réalisation de l'invention sans pour autant sortir du cadre de l'invention.

Par exemple, la première surface d'appui 30 et la seconde surface d'appui 32 de la plaque de support 10 peuvent être proéminentes par rapport au premier bord latéral 14 et au second bord latéral 16, bien que cette configuration ne permette pas aux bords latéraux 14, 16 de former une zone d'appui complémentaire pour le panneau photovoltaïque 12.

De même, une seule plaque de support 10 peut être adaptée pour la fixation et l'intégration de plusieurs panneaux photovoltaïques, selon la taille des panneaux photovoltaïques.

## Revendications

1. Plaque de support (10) adaptée pour la fixation et l'intégration d'au moins un panneau photovoltaïque (12) sur une toiture d'un bâtiment, ladite plaque de support (10) étant délimitée longitudinalement par une extrémité aval (18) et une extrémité amont (19) formant une portion de recouvrement amont (20), suivant le sens d'écoulement des eaux de ruissellement, et transversalement par un premier bord latéral (14) et un second bord latéral (16) qui sont adaptés chacun pour être assemblés avec un bord complémentaire d'une plaque de support voisine, et ladite plaque de support (10) comprenant un évidement (28) pour le passage d'un câble, **caractérisée en ce que** ladite plaque de support (10) comprend des première (30) et seconde (32) surfaces d'appui, agencées de part et d'autre d'un axe médian (A) longitudinal de la plaque de support (10), ces surfaces d'appui (30, 32) étant prévues pour supporter un panneau photovoltaïque, ces surfaces d'appui s'étendant longitudinalement depuis l'extrémité aval (18) de la plaque de support (10) jusqu'à la portion de recouvrement (20), la première surface d'appui (30) étant interposée entre le premier bord latéral (14) et l'évidement (28) et la seconde surface d'appui (32) étant interposée entre le second bord latéral (16) et l'évidement (28), ces surfaces d'appui (30, 32) étant culminantes, ou affleurantes, par rapport au premier bord latéral (14) et au second bord latéral (16), de sorte que la plaque de support (10) autorise un agencement libre de tout ou partie d'au moins un panneau photovoltaïque sur la plaque de support (10).

2. Plaque de support (10) selon la revendication 1, **caractérisée en ce que** le second bord latéral (16) est affleurant aux surfaces d'appui (30, 32) de la plaque de support (10).

3. Plaque de support (10) selon l'une quelconque des revendications précédentes, **caractérisée en ce que** le premier bord latéral (14) et le second bord latéral (16) forment une première nervure et une seconde nervure respectivement qui s'étendent chacune transversalement, le second bord latéral (16) étant conçu pour être emboîté avec le premier bord latéral (14) par coopération de forme, afin de permettre un assemblage de ladite plaque de support (10) avec au moins une plaque de support voisine, et **en ce que** le second bord latéral (16) est conçu pour chevaucher et couvrir le premier bord latéral (14) de façon étanche.

4. Plaque de support (10) selon l'une quelconque des revendications précédentes, **caractérisée en ce que** le premier bord latéral (14) comporte un renfort (36) mécanique de rigidification.

5. Plaque de support (10) selon l'une quelconque des revendications précédentes, **caractérisée en ce que** la première surface d'appui (30) et la seconde surface d'appui (32) comportent chacune un renfort mécanique (34) de rigidification.

6. Plaque de support (10) selon l'une quelconque des revendications précédentes, **caractérisée en ce qu'**elle est équipée d'une première rallonge (42) amovible qui présente un premier bord latéral (50) et un second bord latéral (52), et qui est prévue pour être montée sur l'extrémité amont (19) de la plaque de support (10), pour augmenter longitudinalement la dimension de la plaque de support (10), et **en ce que** la surface d'appui (30) de la plaque de support (10) est affleurante, ou proéminente, par rapport au premier bord latéral (50) et au second bord latéral (52) de la première rallonge (42), de sorte que la première rallonge (42) autorise un agencement libre de tout ou partie d'au moins un panneau photovoltaïque sur l'ensemble formé par la plaque de support (10) et la première rallonge (54).

7. Plaque de support (10) selon l'une quelconque des revendications précédentes, **caractérisée en ce qu'**elle est équipée d'une seconde rallonge (54) amovible qui présente un premier bord latéral (56) conçu pour être emboîté sur le second bord latéral (16) de la plaque de support (10), et un second bord latéral (58) conçu pour être emboîté sur le premier bord latéral (14) de la plaque de support (10), pour augmenter transversalement la dimension de la plaque de support (10), et **en ce que** la surface d'appui (30) de la plaque de support (10) est affleurante, ou proéminente, par rapport au premier bord latéral (56) et au second bord latéral (58) de la seconde rallonge (54), de sorte que la seconde rallonge (54) autorise un agencement libre de tout ou partie d'au moins un panneau photovoltaïque sur l'ensemble formé par la plaque de support (10) et la seconde rallonge (54).

8. Dispositif (66) pour la fixation et l'intégration d'une pluralité de panneaux photovoltaïques (12) sur une toiture d'un bâtiment, **caractérisé en ce qu'**il comporte au moins une première plaque de support (10) et une seconde plaque de support (10) selon l'une quelconque des revendications précédentes, le premier bord latéral (14) de la première plaque de support (10) étant assemblé avec le second bord latéral (16) de la seconde plaque de support (10) pour former une plateforme qui est adaptée pour le support et le positionnement libre d'une pluralité de panneaux photovoltaïques.

## Patentansprüche

1. Stützplatte (10), die geeignet ist, mindestens ein Photovoltaik-Panel (12) auf einem Dach eines Gebäudes zu befestigen und zu integrieren, wobei die Stützplatte (10) längs durch ein nachgeschaltetes Ende (18) und ein vorgeschaltetes Ende (19), das einen vorgeschalteten Abdeckungsabschnitt (20) bildet, in Strömungsrichtung des Abflusswassers und quer durch eine erste seitliche Kante (14) und eine zweite seitliche Kante (16) begrenzt ist, die jeweils angepasst sind, um mit einer komplementären Kante einer benachbarten Stützplatte montiert zu werden, und wobei die **dadurch gekennzeichnet, dass** die Stützplatte (10) eine Aussparung (28) für den Durchgang eines Kabels umfasst, **dadurch gekennzeichnet, dass** die Stützplatte (10) eine erste (30) und eine zweite (32) Lagerfläche umfasst, die auf beiden Seiten einer Längsmittelachse (A) der Stützplatte (10) angeordnet sind, wobei diese Lagerflächen (30, 32) zur Aufnahme eines Photovoltaik-Panels vorgesehen sind, wobei sich diese Lagerflächen längs von dem nachgeschalteten Ende (18) der Stützplatte (10) bis zu dem Abdeckungsabschnitt (20) erstrecken, wobei die erste Lagerfläche (30) zwischen der ersten seitlichen Kante (14) und der Aussparung (28) und die zweite Lagerfläche (32) zwischen der zweiten seitlichen Kante (16) und der Aussparung (28) angeordnet ist, wobei diese Lagerflächen (30, 32) in Bezug auf die erste seitliche Kante (14) und die zweite seitliche Kante (16) hochragend oder bündig sind, so dass die Stützplatte (10) eine freie Anordnung aller oder eines Teils von mindestens einem Photovoltaik-Panel auf der Stützplatte (10) ermöglicht.

2. Stützplatte (10) nach Anspruch 1, **dadurch gekennzeichnet, dass** die zweite seitliche Kante (16) bündig mit den Lagerflächen (30, 32) der Stützplatte (10) abschließt.

3. Stützplatte (10) nach einem der vorhergehenden Ansprüche, **dadurch gekennzeichnet, dass** die erste seitliche Kante (14) und die zweite seitliche Kante (16) jeweils eine erste Rippe und eine zweite Rippe bilden, die sich jeweils quer erstrecken, wobei die zweite seitliche Kante (16) so ausgebildet ist, dass sie durch Formschluss in die erste seitliche Kante (14) eingepasst wird, um es zu ermöglichen, die Stützplatte (10) mit mindestens einer benachbarten Stützplatte zu verbinden, und dass die zweite seitliche Kante (16) so ausgelegt ist, dass sie die erste seitliche Kante (14) dicht überlappt und abdeckt.

4. Stützplatte (10) nach einem der vorhergehenden Ansprüche, **dadurch gekennzeichnet, dass** die erste seitliche Kante (14) eine mechanische Versteifungsverstärkung (36) aufweist.

5. Stützplatte (10) nach einem der vorhergehenden Ansprüche, **dadurch gekennzeichnet, dass** die erste Lagerfläche (30) und die zweite Lagerfläche (32) jeweils eine mechanische Versteifungsverstärkung (34) aufweisen.

6. Stützplatte (10) nach einem der vorhergehenden Ansprüche, **dadurch gekennzeichnet, dass** sie mit einem ersten abnehmbaren Dehnstreifen (42) ausgestattet ist, der eine erste seitliche Kante (50) und eine zweite seitliche Kante (52) aufweist, und dass sie vorgesehen ist, an dem vorgeschalteten Ende (19) der Stützplatte (10) montiert zu werden, um das Maß der Stützplatte (10) längs zu vergrößern, und dass die Lagerfläche (30) der Stützplatte (10) bündig oder vorstehend gegenüber der ersten seitlichen Kante (50) und der zweiten seitlichen Kante (52) des ersten Dehnstreifens (42) ist, so dass der erste Dehnstreifen (42) eine freie Anordnung des gesamten oder eines Teils des mindestens einen Photovoltaik-Panels auf der durch die Stützplatte (10) und den ersten Dehnstreifen (54) gebildeten Baugruppe ermöglicht.

7. Stützplatte (10) nach einem der vorhergehenden Ansprüche, **dadurch gekennzeichnet, dass** sie mit einem zweiten abnehmbaren Dehnstreifen (54) ausgestattet ist, der eine erste seitliche Kante (56) aufweist, die zum Einpassen in die zweite seitliche Kante (16) der Stützplatte (10) ausgebildet ist, und eine zweite seitliche Kante (58), die zum Einpassen in die erste seitliche Kante (14) der Stützplatte (10) ausgebildet ist, um das Maß der Stützplatte (10) quer zu vergrößern, und dass die Lagerfläche (30) der Stützplatte (10) bündig oder vorstehend gegenüber der ersten seitlichen Kante (56) und der zweiten seitlichen Kante (58) des zweiten Dehnstreifens (54) ist, so dass der zweite Dehnstreifen (54) eine freie Anordnung des gesamten oder eines Teils des mindestens einen Photovoltaik-Panels auf der durch die Stützplatte (10) und den zweiten Dehnstreifen (54) gebildeten Baugruppe ermöglicht.

8. Vorrichtung (66) zum Befestigen und Integrieren einer Vielzahl von Photovoltaik-Panelen (12) auf einem Dach eines Gebäudes, **dadurch gekennzeichnet, dass** sie mindestens eine erste Stützplatte (10) und eine zweite Stützplatte (10) nach einem der vorhergehenden Ansprüche aufweist, wobei die erste seitliche Kante (14) der ersten Stützplatte (10) mit der zweiten seitlichen Kante (16) der zweiten Stützplatte (10) verbunden ist, um eine Plattform zu bilden, die zum Stützen und freien Positionieren einer Vielzahl von Photovoltaik-Panelen geeignet ist.

## Claims

1. Support plate (10) suitable for attaching and integrating at least one photovoltaic panel (12) on a roof of a building, said support plate (10) being delimited longitudinally by a downstream end (18) and an upstream end (19) forming an upstream cover portion (20), in the direction of flow of run-off water, and transversely by a first lateral edge (14) and a second lateral edge (16) that are each adapted to be assembled with a complementary edge of an adjacent support plate, and said support plate (10) comprising a recess (28) for the passage of a cable, **characterized in that** said support plate (10) comprises first (30) and second (32) bearing surfaces, arranged on either side of a longitudinal median axis (A) of the support plate (10), these bearing surfaces (30, 32) being provided to support a photovoltaic panel, these bearing surfaces extending longitudinally from the downstream end (18) of the support plate (10) up to the cover portion (20), the first bearing surface (30) being interposed between the first lateral edge (14) and the recess (28) and the second bearing surface (32) being interposed between the second lateral edge (16) and the recess (28), these bearing surfaces (30, 32) being culminating, or flush, with respect to the first lateral edge (14) and to the second lateral edge (16), so that the support plate (10) permits a free arrangement of all or part of at least one photovoltaic panel on the support plate (10).

2. Support plate (10) according to claim 1, **characterized in that** the second lateral edge (16) is flush with the bearing surfaces (30, 32) of the support plate (10).

3. Support plate (10) according to any one of the preceding claims, **characterized in that** the first lateral edge (14) and the second lateral edge (16) form a first rib and a second rib respectively that each extend transversely, the second lateral edge (16) being designed to be fitted into the first lateral edge (14) by cooperation of shape, in order to make it possible to assemble said support plate (10) with at least one adjacent support plate, and **in that** the second lateral edge (16) is designed to overlap and cover the first lateral edge (14) in a sealed manner.

4. Support plate (10) according to any one of the preceding claims, **characterized in that** the first lateral edge (14) includes a mechanical stiffening reinforcement (36).

5. Support plate (10) according to any one of the preceding claims, **characterized in that** the first bearing surface (30) and the second bearing surface (32) each include a mechanical stiffening reinforcement (34).

6. Support plate (10) according to any one of the preceding claims, **characterized in that** it is equipped with a first removable elongation strip (42) that has a first lateral edge (50) and a second lateral edge (52), and that is provided to be mounted on the upstream end (19) of the support plate (10), to increase longitudinally the dimension of the support plate (10), and **in that** the bearing surface (30) of the support plate (10) is flush, or protruding, with respect to the first lateral edge (50) and to the second lateral edge (52) of the first elongation strip (42), so that the first elongation strip (42) permits a free arrangement of all or part of at least one photovoltaic panel on the assembly formed by the support plate (10) and the first elongation strip (54).

7. Support plate (10) according to any one of the preceding claims, **characterized in that** it is equipped with a second removable elongation strip (54) that has a first lateral edge (56) designed to be fitted into the second lateral edge (16) of the support plate (10), and a second lateral edge (58) designed to be fitted into the first lateral edge (14) of the support plate (10), to transversely increase the dimension of the support plate (10), and **in that** the bearing surface (30) of the support plate (10) is flush, or protruding, with respect to the first lateral edge (56) and to the second lateral edge (58) of the second elongation strip (54), so that the second elongation strip (54) permits a free arrangement of all or part of at least one photovoltaic panel on the assembly formed by the support plate (10) and the second elongation strip (54).

8. Device (66) for attaching and integrating a plurality of photovoltaic panels (12) on a roof of a building, **characterized in that** it includes at least one first support plate (10) and a second support plate (10) according to any one of the preceding claims, the first lateral edge (14) of the first support plate (10) being assembled with the second lateral edge (16) of the second support plate (10) to form a platform that is suitable for the support and free positioning of a plurality of photovoltaic panels.
